(19) Europäisches Patentamt
European Patent Office
Office européen des brevets

(11) **EP 4 397 564 B1**

(12) **EUROPEAN PATENT SPECIFICATION**

(45) Date of publication and mention
of the grant of the patent:
**10.06.2026  Bulletin 2026/24**

(21) Application number: **22863934.0**

(22) Date of filing: **14.04.2022**

(51) International Patent Classification (IPC):
*B61L 23/00* (2006.01)    *G06T 7/00* (2017.01)
*G06T 7/60* (2017.01)

(52) Cooperative Patent Classification (CPC):
**G06T 7/00; B61L 23/041; G06T 7/60; G06V 10/25;
G06V 10/62; G06V 20/54; G06V 20/58**

(86) International application number:
**PCT/JP2022/017760**

(87) International publication number:
**WO 2023/032344 (09.03.2023 Gazette 2023/10)**

(54) **SYSTEM FOR DETECTING OBJECT AND METHOD FOR DETECTING OBJECT**

SYSTEM ZUR OBJEKTERKENNUNG UND VERFAHREN ZUR OBJEKTERKENNUNG

SYSTÈME DE DÉTECTION D'OBJET ET PROCÉDÉ DE DÉTECTION D'OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2021  JP 2021141404**

(43) Date of publication of application:
**10.07.2024  Bulletin 2024/28**

(73) Proprietor: **Hitachi, Ltd.**
**Tokyo 100-8280 (JP)**

(72) Inventors:
• **HIROKI, Keiichi**
**Tokyo 100-8280 (JP)**
• **ODA, Atsushi**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
WO-A1-2019/194017    JP-A- 2019 206 318
JP-A- 2020 203 634    JP-A- 2021 517 537
JP-A- 2021 517 537    JP-B2- 6 381 981
US-A1- 2020 307 661

## Description

Technical Field

The present invention relates to a technology of detecting a target object in an image.

Background Art

As means for cost reduction and service improvement in the railway transportation business, motorman-less operation of trains has been attracting attention. For railway operators, labor costs of motormen and costs required for training motormen are considerable, and expectations of the railway operators for motorman cost reduction realized by motorman-less operation are high. In addition, in terms of service, since constraints regarding assignment of motormen will be removed, the degree of freedom of operation improves, and also improvement of convenience for users owing to highly frequent operation can also be expected.

Although motorman-less operation has already been realized in subway systems or new types of transportation that cause railway vehicles to travel on elevated railroads, there are no practical examples of routes where humans may enter, such as routes where there are level crossings and the like or routes in rail yards where there are workers. Realization of motorman-less operation requires means for detecting obstacles such as humans or vehicles that may enter tracks. Particularly, it is necessary to detect distant obstacles fast and highly precisely in order to decelerate or stop upon detection of obstacles.

In cases considered in the present invention, cameras and image processing are used to perform obstacle detection. As technologies to recognize and detect objects by image processing, there are general object recognition technologies with precision which has been enhanced rapidly owing to deep learning in recent years. However, the general object recognition technologies have a tendency that the precision of detecting objects with smaller pixel counts in images deteriorates.

A technology in JP-2019-181996-A aims to detect obstacles by setting a monitored region around a track and capturing images of the monitored region with stereo cameras.

JP 2020203634 A discloses a monitoring device that monitors an obstacle existing in front of a railway or other transportation facility.

Summary of the Invention

Problems to be Solved by the Invention

It is difficult with the general object recognition technologies to detect objects with smaller pixel counts in images. Due to restrictions of computational costs in performing real-time processing, input image sizes are restricted to certain sizes such as $608 \times 608$ or $416 \times 416$ in the general object recognition technologies. Accordingly, even if a high-resolution image is captured, it is downsized undesirably when used as input in the general object recognition technologies.

If the image is downsized, it becomes difficult to detect objects with smaller pixel counts, such as distant obstacles. One conceivable measure for detecting objects with smaller pixel counts is to set particular regions in an image as ROIs (Regions Of Interest), and treat only the ROIs as processing targets. However, since the region outside the ROIs is excluded from processing targets, it is necessary to appropriately select coordinates and sizes of the ROIs in order to achieve the purpose of obstacle detection.

Although, in conventional obstacle detection approaches, ROIs are limited by defining a region that needs to be monitored, in a case where the region is large or in a case where there are a plurality of regions and the regions are distributed over a wide range in an image, the image needs to be captured with a large angle of view; as a result, a captured image of a target object becomes small undesirably, and the sensing may fail.

Means for Solving the Problems

Hitachi, Ltd.

The present invention is defined by the appended claims.

Advantages of the Invention

According to an aspect of the present invention, a target object can be detected fast and highly precisely. Further features associated with the present invention will become clear from the description and attached figures of the present specification. In addition, problems, configurations, and advantages other than those described above will be made clear by the following explanation of an embodiment.

Brief Description of the Drawings

FIG. 1 schematically depicts a configuration example of an intra-structure-gauge obstacle detection system.
FIG. 2 schematically depicts an example of an input image.
FIG. 3 schematically depicts a configuration example of an ROI processing section.
FIG. 4A schematically depicts a configuration example of a detection-target-object coefficient table.
FIG. 4B schematically depicts a configuration example of an obstacle detection model/detection precision coefficient table.
FIG. 4C schematically depicts a configuration example of a track width coefficient table.
FIG. 4D schematically depicts a configuration example of a weather/time interval coefficient table.
FIG. 5 depicts the procedure of a process example of the intra-structure-gauge obstacle detection system.
FIG. 6 depicts the procedure of a process example of determination of ROIs.
FIG. 7 depicts an example of a first pattern of the relation between a track and ROIs in an input image.
FIG. 8 depicts an example of a second pattern of the relation between a track and ROIs in an input image.
FIG. 9 depicts an example of a third pattern of the relation between a track and ROIs in an input image.
FIG. 10 depicts an example of a plurality of ROIs determined for an input image.

Modes for Carrying Out the Invention

Hereinbelow, several embodiments are explained by use of the figures. Note that, in the following embodiments, explanation is given with regard to a plurality of divided sections or embodiments when it is necessary to do so for convenience; however, unless clearly noted otherwise particularly, they are mutually not unrelated, and one of them is related to a part or the whole of the others as a modification example, details, an additional explanation, or the like. The embodiments may be implemented separately, but may also be implemented in combination.

In addition, in a case where numbers or the like related to an element (including a quantity, a numerical value, an amount, a range, and the like) are described in the following embodiments, the numbers are not limited to the particular numbers unless clearly noted otherwise particularly, except when the numbers are obviously limited to the particular numbers in principle, and so on, and the numbers may be equal to or greater than or equal to or smaller than the particular numbers.

Further, it is not needless to say that constituent elements (including element steps and the like) of the following embodiments are not necessarily essential unless clearly noted otherwise particularly, except when those constituent elements are deemed to be obviously essential in principle, and so on.

Similarly, when the shapes, positional relations, and the like of constituent elements and the like are described in the following embodiments, shapes, relations, and the like that are substantially approximate or similar to those shapes and the like are included, unless clearly noted otherwise particularly, except when they are deemed to be obviously not so in principle, and so on. The same applies also to numerical values and ranges.

In addition, whereas explanation uses expressions like "xxx table" in some cases in the following explanation, the information may be data with any structure. In addition, in the following explanation, the configuration of each table is an example. One table may be divided into two or more tables, and all or some of two or more tables may be one table. In addition, whereas functions are explained by use of the expression "xxx section" in some cases in the following explanation, the functions may also be realized by execution of one or more computer programs.

An object detection system according to one embodiment of the present specification detects objects in an image captured from a moving body moving on a track with a specified width. For example, the system can be used for detection of obstacles of a railway vehicle travelling on a track including rails, a conveyance robot moving on a track which is a lane with a predetermined width, and the like. The system can be used for operation assistance, automated operation, and the like of moving bodies travelling on tracks. Hereinbelow, a specific explanation is given with regard to an example of a system that detects obstacles of a railway vehicle moving on rails.

In automated operation or operation assistance of a railway vehicle, detection of obstacles in a structure gauge is required. An obstacle detection system explained in one embodiment of the present specification receives images captured with one camera that is attached to a railway vehicle and that monitors the front space, and detects obstacles in a structure gauge centered on a track.

The structure gauge determines dimensional bounds defining a region around the track on which the railway vehicle is travelling and the construction of buildings, the planting of trees, or the like are prohibited in the region. The structure gauge is a region with a certain width L [m] centered on the center of the track on which the railway vehicle is moving. That is, both sides of the track are detection targets. The numerical value of the width L is predetermined for a certain track width R [m].

In order to detect objects with smaller pixel counts in an input image, the obstacle detection system sets particular regions in an image as ROIs (Regions Of Interest), and treats only the ROIs as processing targets. It is supposed in an example explained below that an ROI is a square including two sides that are parallel to the vertical axis of an image and two sides parallel to the horizontal axis of the image. An ROI may have another shape, for example, an oblong.

The region outside ROIs is excluded from processing targets. Accordingly, in performing obstacle detection using an input image captured with a front-space monitoring camera of the railway vehicle, the obstacle detection system sets ROIs on the basis of detection conditions required for detecting an obstacle appropriately. As a result, ROIs that enable appropriate balance of detection precision, a range of detection, a processing speed, and the like can be set.

In the real world, the track width and the structure gauge width are constant widths. Here, in the present specification, v coordinates (ordinates) in the longitudinal direction and u coordinates (abscissas) in the lateral direction are set, with their origins at the upper left corner of an image. It can be considered that the ratios (scales) between lengths in the real world and lengths in the image do not change if v coordinates in the image of measured geographical points are the same.

In view of this condition, the obstacle detection system according to one embodiment of the present invention determines ROIs on the basis of a track width in an image and a predetermined coefficient. This coefficient is called an ROI coefficient. Thus, it is possible to obtain ROIs that can satisfy necessary detection precision and have sizes sufficient for reducing computational costs.

For example, the ROI coefficient is based on a pixel count of a target object in an image necessary for detection, the size of the detection-target object in the real world, the input image size of an object recognition program, and a track width in the real world. In one embodiment of the present specification, the width of an ROI is determined as the track width R [m] multiplied by the coefficient.

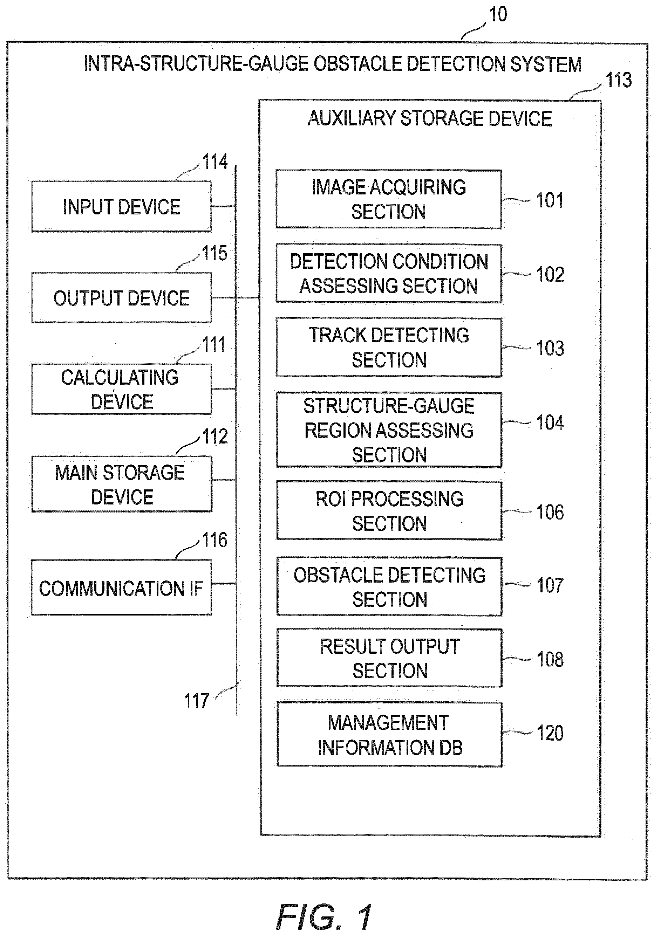

FIG. 1 is a block diagram schematically depicting a configuration example of an intra-structure-gauge obstacle detection system according to one embodiment of the present specification.. An intra-structure-gauge obstacle detection system 10 includes a calculating device 111 having calculation capabilities and a main storage device 112 that provides a storage area that stores programs to be executed by the calculating device 111 and processing-target data. For example, the calculating device 111 is a CPU or a GPU including one or more cores, and, for example, the main storage device 112 is a DRAM including a volatile storage area.

The intra-structure-gauge obstacle detection system 10 further includes a communication interface (IF) 116 that performs data communication with external devices such as another computer device, an external storage device, a camera, a microphone, or various types of sensors and an auxiliary storage device 113 that provides a non-volatile storage area using an HDD (Hard Disk Drive), a flash memory, or the like.

In addition, the intra-structure-gauge obstacle detection system 10 includes an input device 114 that accepts manipulation by a user and an output device 115 that presents output results of each process to the user. For example, the input device 114 includes a keyboard and a mouse, and, for example, the output device 115 includes a display that displays results of detection by the intra-structure-gauge obstacle detection system 10, a speaker that issues alerts, and the like. These constituent elements of the intra-structure-gauge obstacle detection system 10 can communicate with each other via an internal bus 117.

In FIG. 1, the auxiliary storage device 113 stores various types of programs that realize detection processes by the intra-structure-gauge obstacle detection system 10, information to be referred to in the detection processes, and execution results of the processes. In FIG. 1, the auxiliary storage device 113 has stored thereon various types of programs of an image acquiring section 101, a detection condition assessing section 102, a track detecting section 103, a structure-gauge region assessing section 104, an ROI processing section 106, an obstacle detecting section 107, and a result output section 108. Further, the auxiliary storage device 113 has stored thereon a management information database (DB) 120 including information necessary for obstacle detection.

The programs executed by the calculating device 111 and processing-target data are loaded from the auxiliary storage device 113 onto the main storage device 112. In accordance with the respective programs described above, the calculating device 111 can operate as functional sections corresponding to them.

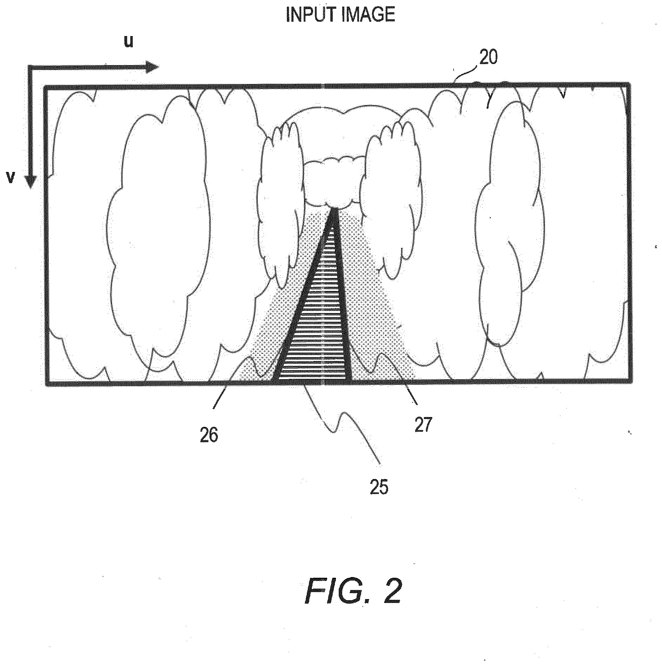

The image acquiring section 101 receives an image from a monitoring camera received via the communication interface 116. In one embodiment of the present specification, the input image is an image including an image of a track which is a captured image of the space in an advancing direction of a railway vehicle. FIG. 2 schematically depicts an example of the input image. An input image 20 includes a track 25 extending forward from a railway vehicle. The track 25 extends between trees around it. The track 25 includes a left rail 26 and a right rail 27, and these define the width of the track 25. v coordinates in the longitudinal direction and u coordinates in the lateral direction are set, with their origins at the upper left corner of the input image 20.

Referring back to FIG. 1, the detection condition assessing section 102 assesses detection conditions for determining an ROI coefficient. The detection conditions are variables such as a target-object type (human, car, etc.), an input image size (608 × 608, 416 × 416, etc.) of an object recognition program, necessary detection precision (whether it is necessary to perform detection with the precision of 99%, the precision of 90% is sufficient, etc.), weather, and daytime or nighttime.

Some or all of the detection conditions may be designated by a user via the input device 114, and stored on the management information database 120 in advance. The detection condition assessing section 102 may assess at least some conditions by analyzing an input image or information from external sensors.

The track detecting section 103 detects, from the input image, the track on which the railway vehicle is moving, and outputs coordinates of the track, for example, coordinates of the left and right rails and center coordinates of the track. The structure-gauge region assessing section 104 assesses a structure gauge in the input image on the basis of the coordinates of the track detected by the track detecting section 103, and outputs the structure gauge. The region inside the structure gauge is called a structure-gauge region. The structure-gauge region is a detection region where a target object should be detected, and are defined by two boundary lines representing the structure gauge on both sides.

On the basis of the detection conditions obtained by the assessment by the detection condition assessing section 102, the track detection result obtained by the detection by the track detecting section 103, and the structure-gauge region obtained by the assessment by the structure-gauge region assessing section 104, the ROI processing section 106 determines a plurality of ROIs, and outputs them. The obstacle detecting section 107 performs an obstacle detection process by using, as input, an image included in each ROI. By using the output device 115, the result output section 108 outputs obstacle detection results obtained by the detection by the obstacle detecting section 107.

The intra-structure-gauge obstacle detection system 10 may be a physical computer system (one or more physical computers) or may be a system built on a group of computational resources (a plurality of computational resources) such as a cloud computing infrastructure. The intra-structure-gauge obstacle detection system 10 may be mobile equipment such as a smartphone or a tablet. The computer system or the group of computational resources includes one or more interface devices, one or more storage devices (e.g., including a main storage device and an auxiliary storage device), and one or more calculating devices.

Since predetermined processes are performed by use of, for example, the storage devices and/or the interface devices as appropriate in a case where the functions are realized by execution of the programs by the calculating devices, the functions may be at least a part of the calculating devices. Processes explained by use of sentences whose subjects are the functions may be processes performed by the calculating devices or a system having their processors.

The programs may be installed from a program source. For example, the program source may be a program distribution computer or a computer-readable storage medium (e.g., a computer-readable non-transitory storage medium). Each of the functions explained is an example. A plurality of functions may be integrated into one function, one function may be divided into a plurality of functions, and so on.

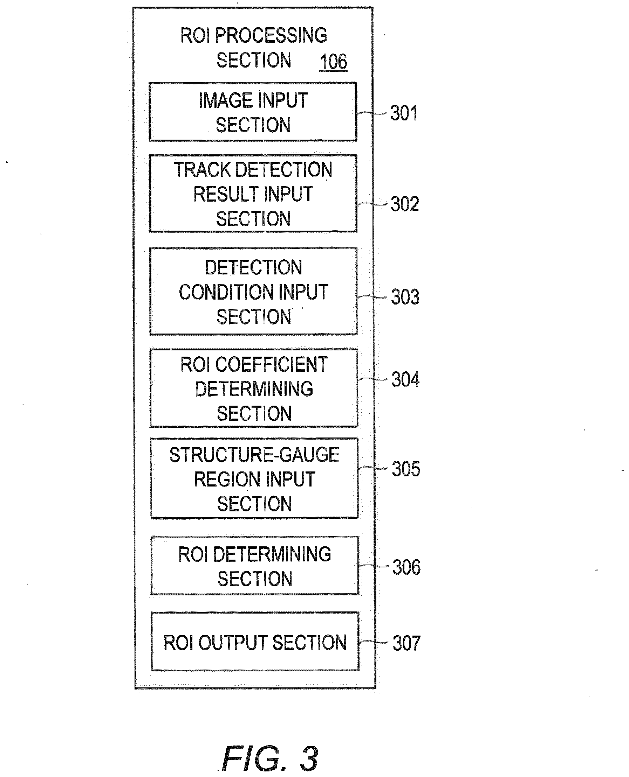

FIG. 3 is a block diagram schematically depicting the configuration of the ROI processing section 106. An image input section 301 receives, as input, the image captured by the monitoring camera and acquired by the image acquiring section 101. A track detection result input section 302 receives, as input, the coordinates of the left and right rails of the track detected by the track detecting section 103. A detection condition input section 303 receives, as input, the detection conditions from the detection condition assessing section 102.

On the basis of the input detection conditions and information stored on the management information database 120, an ROI coefficient determining section 304 determines the ROI coefficient. A structure-gauge region input section 305 acquires the structure-gauge region in the image from the structure-gauge region assessing section 104. On the basis of the track detection result, the structure-gauge region, and the ROI coefficient, an ROI determining section 306 determines a plurality of ROIs. An ROI output section 307 outputs the determined ROIs.

In one embodiment of the present specification, the ROI coefficient can be determined on the basis of the following perspective. Detection of a detection target requires a height p [pixel] in the image, and it is supposed here that statistically the average height of the detection target in the real world is P [m]. In addition, it is supposed here that the track width in the real world is R [m] and that the width of the track in the image at a certain geographical point is w [pixel]. Further, it is supposed here that the length of one side of the size of an image to be input to an object detection model (program) is i [pixel]. Image data of the ROIs is enlarged or downsized, is standardized such that the length of each side of the images is i, and is input to the object detection model.

The maximum ROI width with which the target object can be detected can be determined by the following formula, for example.

$$\texttt{ROI width = (iPw/pR) [pixel]}$$

Since i, R, p, and P are known, the maximum value of ROI widths with which the target object can be detected at a certain geographical point in the image is the width w [pixel] of the track at the same geographical point multiplied by (iP/pR). This coefficient (iP/pR) is the ROI coefficient, and the ROI widths is required to be equal to or smaller than this value.

The average height P of the detection-target object in the real world is determined depending on the detection-target object. In addition, the track width R is determined depending on the track on which the railway vehicle is travelling. The length i of one side of an image to be input to the object detection model is determined depending on the specifications of the object detection model.

The height p required for object detection can be dependent on required detection precision of the object detection model or the clarity of input images. The clarity of input images can change depending on the surrounding environment, for example, weather or a time interval. Reducing the ROI widths means increasing the height of the detection-target object in:images to be input to the object detection model.

In one embodiment of the present specification, the detection conditions and coefficients for determining the ROI coefficient are retained in the management information database 120 in order to determine the ROI coefficient. Hereinbelow, information that is included in the management information database 120 and is for associating the detection conditions and the ROI coefficient with each other is explained.

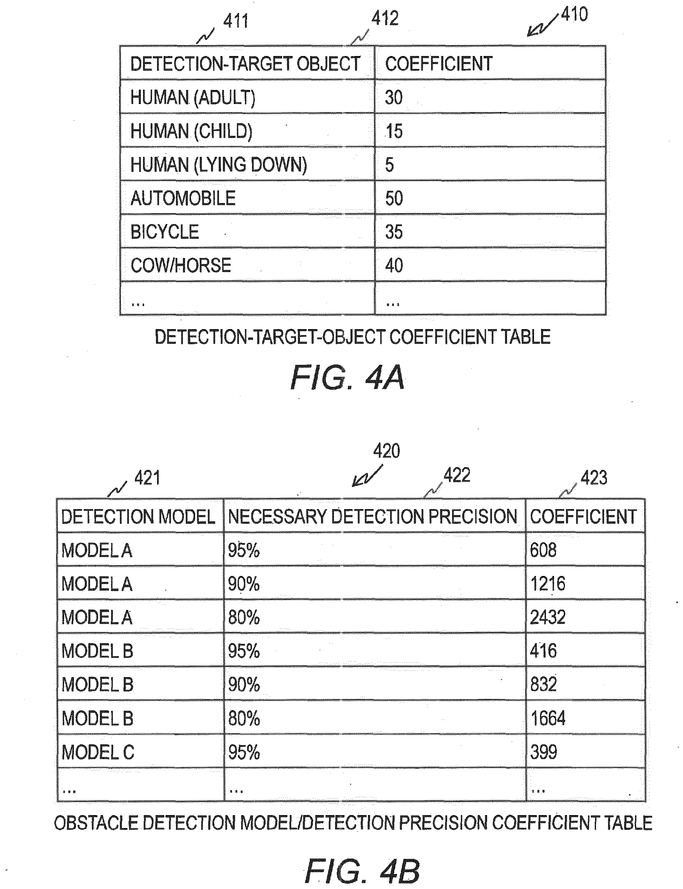

FIG. 4A depicts a configuration example of a detection-target-object coefficient table 410. The detection-target-object coefficient table 410 associates detection-target objects and coefficients for calculating the ROI coefficient with each other. The detection-target-object coefficient table 410 includes a detection-target object field 411 and a coefficient field 412. A user can designate one or more detection-target objects in the detection-target objects depicted in the detection-target object field 411, via the input device 114. In a case where a plurality of detection-target objects are designated, the smallest coefficient is selected for calculation of the ROI coefficient.

FIG. 4B depicts a configuration example of an obstacle detection model/detection precision coefficient table 420. The obstacle detection model/detection precision coefficient table 420 manages the relation between necessary detection precision required for obstacle detection models (detection programs) and coefficients. The obstacle detection model/detection precision coefficient table 420 includes a detection model field 421, a necessary detection precision field 422, and a coefficient field 423.

The detection model field 421 represents the types of the obstacle detection models. The necessary detection precision field 422 represents the lowest values of precision required for obstacle detection. The coefficient field 423 represents coefficients of combinations of the detection models and the necessary detection precision. The coefficients are used for the calculation of the ROI coefficient. In the present example, information regarding the size of an image to be input to an obstacle detection model, the information being necessary for the calculation of the ROI coefficient, is included in the coefficients in the coefficient field 423. For example, in a case where the necessary precision is equal to or greater than 95%, the coefficient matches the size of an image to be input to a detection model. For example, an obstacle detection model and necessary detection precision are designated by a user via the input device 114, and stored on the management information database 120.

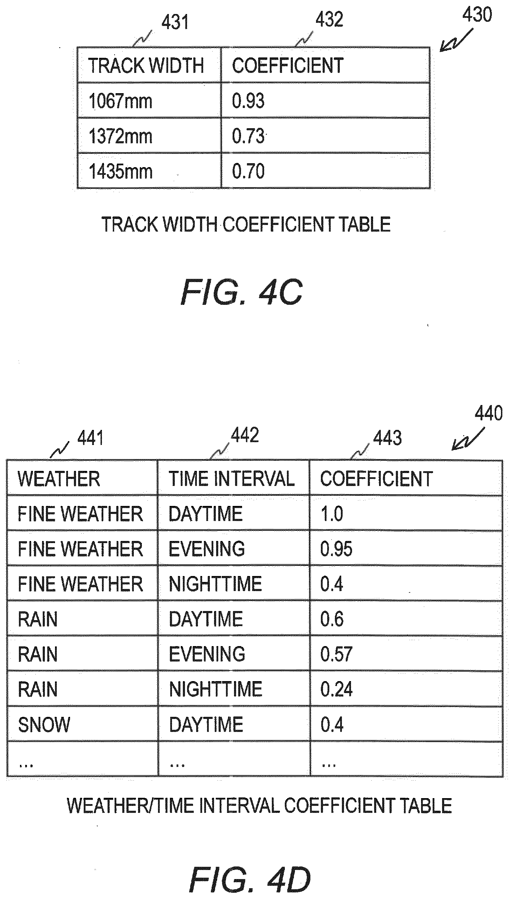

FIG. 4C depicts a configuration example of a track width coefficient table 430. The track width coefficient table 430 manages the relation between track widths and coefficients. The track width coefficient table 430 includes a track width field 431 and a coefficient field 432. For example, a track width is designated by a user via the input device 114, and stored on the management information database 120.

FIG. 4D depicts a configuration example of a weather/time interval coefficient table 440. The weather/time interval coefficient table 440 manages the relation between weather/time intervals at the times of obstacle detection and coefficients. The weather/time interval coefficient table 440 includes a weather field 441, a time interval field 442, and a coefficient field 443. The weather field 441 represents weather such as fine weather or rain, and the time interval field 442 represents time intervals such as daytime or nighttime. Note that the weather field or the time interval field may represent weather or time intervals by another method. The coefficient field 423 represents coefficients for combinations of weather and time intervals.

For example, a weather/time interval may be designated by a user via the input device 114 before the start of operation, and stored on the management information database 120. The detection condition assessing section 102 may determine a weather/time interval on the basis of information from sensors or an external system. For example, the detection condition assessing section 102 can assess weather by using an external weather information system or a meteorological sensor. The detection condition assessing section 102 can assess the time interval by using a timer or an illuminance sensor.

As described above, in one embodiment of the present specification, the detection conditions can include a detection-target object, necessary detection precision, a track width, weather, and a time interval in the real world, and the like. The ROI coefficient determining section 304 acquires coefficients from the tables 410, 420, 430, and 440 by using the detection conditions (a detection-target object, a detection model, necessary detection precision, a track width, weather, a time interval) as keys. The ROI coefficient determining section 304 calculates the ROI coefficient by integrating all the acquired coefficients and a constant independent of the detection conditions.

Note that some conditions of the conditions depicted in FIGS. 4A to 4D may be omitted, or other conditions may be added. For example, the obstacle detection model/detection precision coefficient table 420 and the weather/time interval coefficient table 440 may be omitted.

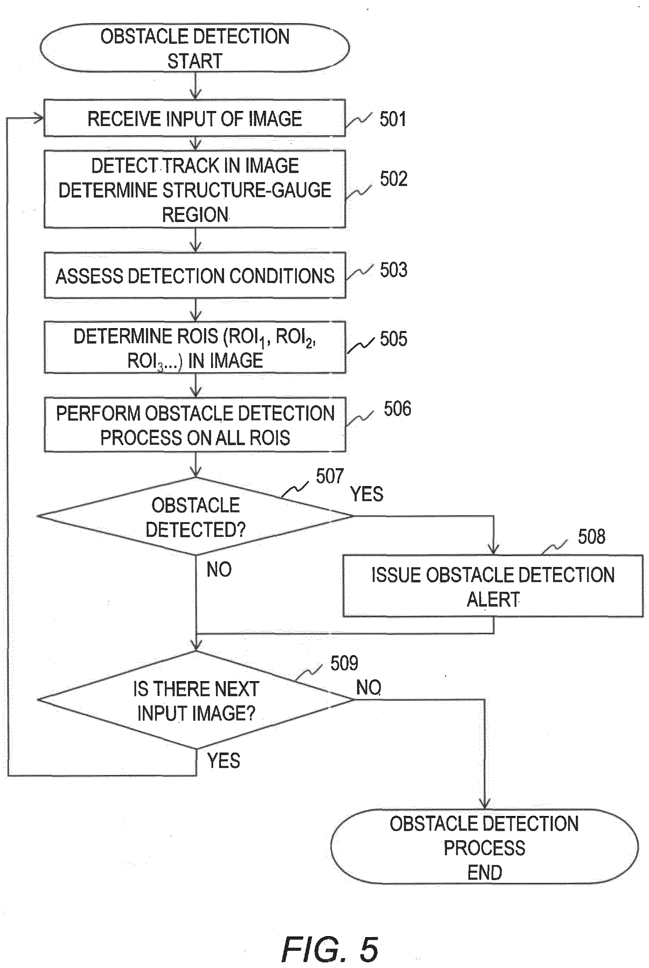

Next, an operation of the intra-structure-gauge obstacle detection system 10 is explained. FIG. 5 depicts a flowchart of the operation of the intra-structure-gauge obstacle detection system 10. In step 501, the image acquiring section 101 receives an input image from an external camera.

In step 502, the track detecting section 103 detects a track in the input image. The detection of a track may be performed by image processing, or coordinates of a track in the input image may be calculated by using a GPS or map data. Since the track extends from the front end of the railway vehicle, it can be detected easily as compared with obstacles or the like. For example, coordinates of the track represent the centerline between the left and right rails. As described above, v coordinates in the longitudinal direction and u coordinates in the lateral direction are set, with their origins at the upper left corner of the input image. Coordinates of the track represent the u coordinate and v coordinate of each point of the centerline. For example, the values of the v coordinates increase from the upper side to the lower side of the image, and the values of the u coordinate increase from the left side to the right side of the image.

Further, the structure-gauge region assessing section 104 determines a structure gauge. The structure gauge includes two structure-gauge lines, and a region outlined by the structure-gauge lines is a structure-gauge region. The structure-gauge region is a region having its center at the u coordinates of the track, and its width which is the track width multiplied by a constant. In a case where it is supposed that the width of the structure gauge in the real world is L [m] and the width of the track in the real world is R [m], the constant is L/R. The value of L is preset,and, for example, is stored on the management information database 120.

Next, in step 503, the detection condition assessing section 102 assesses detection conditions by the method described before. In the example described above, the detection condition assessing section 102 determines a detection-target object, an object detection model, necessary detection precision, a track width, weather, and a time interval.

In step 505, the ROI processing section 106 determines a necessary and sufficient number of ROIs with necessary and sufficient sizes, on the basis of detection results of the track and the structure-gauge region in step 502 and the detection conditions assessed in step 503. Details of the process of the ROI processing section 106 in step 505 are described later.

In step 506, the obstacle detecting section 107 performs an obstacle detection process on all the ROIs. In a case where an obstacle is detected (507: YES), the procedure proceeds to step 508. In step 508, the result output section 108 issues an obstacle detection alert. In a case where the result output section 108 can manipulate a human interface for a motorman, the result output section 108 may give a warning to the motorman, or in a case where the result output section 108 is connected with an operation control device of the railway vehicle, the result output section 108 may perform a process of decelerating the vehicle.

After step 508, the procedure proceeds to step 509. In a case where obstacles are not detected in step 506 (507: NO), the procedure proceeds to step 509. In step 509, the image acquiring section 101 assesses whether there is an input image that should be processed next. In a case where there is an input image that should be processed next (509: YES), the procedure returns to step 501, and the next input image is received. In a case where there is not an input image that should be processed next (509: NO), the present process ends.

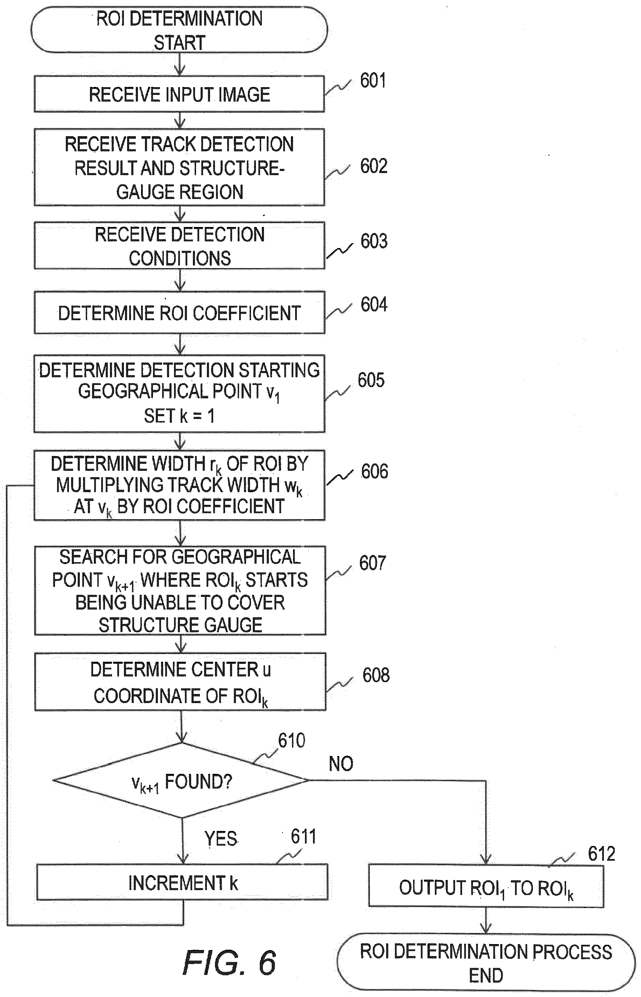

Hereinbelow, detail of the process of the ROI processing section 106 performed in step 505 are explained. FIG. 6 depicts a flowchart of the process performed by the ROI processing section 106 in step 505. In step 601, the image input section 301 receives an input image. For example, the input image is an image as the one depicted in FIG. 2.

In step 602, the track detection result input section 302 receives a track detection result from the track detecting section 103. Further, the structure-gauge region input section 305 receives information regarding the structure-gauge region from the structure-gauge region assessing section 104. In step 603, the detection condition input section 303 receives the detection conditions from the detection condition assessing section 102.

In step 604, the ROI coefficient determining section 304 determines an ROI coefficient. Specifically, in accordance with the detection conditions acquired from the detection condition input section 303, the ROI coefficient determining section 304 acquires coefficients from the detection-target-object coefficient table 410, the obstacle detection model/detection precision coefficient table 420, the track width coefficient table 430, and the weather/time interval coefficient table 440. The ROI coefficient determining section 304 calculates, as the ROI coefficient, the product of the acquired coefficients and the predetermined constant.

In step 605, the ROI determining section 306 determines a v coordinate $v_1$ of a detection starting geographical point in the input image. $v_1$ is the v coordinate of a geographical point which is the farthest from the vehicle in monitoring-target geographical points. That is, $v_1$ is the top monitoring-target geographical point in the image, and is the minimum value in v coordinates of the monitoring-target geographical points. In an example of a method of determining $v_1$, a geographical point which is the farthest from the vehicle in coordinates of a detected track (coordinates of the centerline of the track) is set as $v_1$. In another example, $v_1$ may be determined on the basis of a braking distance calculated from the travelling speed of the railway vehicle. Here, 1 is assigned to a variable k.

In step 606, the ROI determining section 306 determines a width $r_k$ of an $ROI_k$ which is the k-th ROI, by multiplying a width $w_k$ of the track at a geographical point at a v coordinate $v_k$ in a screen by the ROI coefficient. As described above, it is supposed here that the ROI is a square. The v coordinate of the upper side of the $\text{ROI}_k$ is $v_k$. $v_k$ is the reference ordinate value of the $\text{ROI}_k$.

Next, in step 607, the ROI determining section 306 searches for a geographical point (position) where the $\text{ROI}_k$ starts being unable to cover the structure-gauge region, that is, a geographical point where the structure-gauge region goes out of the $\text{ROI}_k$ first. The v coordinate of the geographical point is set as $v_k$.

There are three patterns of modes where the $\text{ROI}_k$ starts being unable to cover the structure-gauge region. In addition, as a fourth pattern, there is a case where there is not such a geographical point, that is, a case where the $\text{ROI}_k$ covers the closest end of the structure-gauge region in the image. The ROI determining section 306 assesses which of the four patterns described above is true of the $\text{ROI}_k$, on the basis of the relation between the $\text{ROI}_k$ and the track in the image.

The geographical point where the structure-gauge region goes out of the $\text{ROI}_k$. depends on the shape and position of the $\text{ROI}_k$. As described above, the length $r_k$ of one side of the $\text{ROI}_k$ and the v coordinate $v_k$ of the upper side of the $\text{ROI}_k$ have been determined already, and the u coordinate of the $\text{ROI}_k$ has not been determined. The final u coordinate of the $\text{ROI}_k$ is determined in step 608 described later. The ROI determining section 306 adjusts the u coordinate of the $\text{ROI}_k$, and assesses which of the patterns described above the $\text{ROI}_k$ corresponds to.

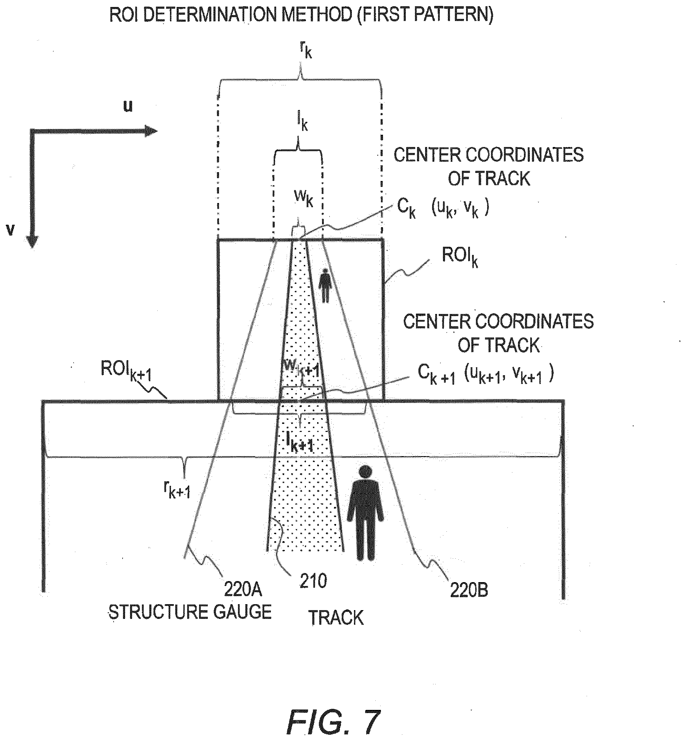

FIG. 7 schematically depicts a first pattern of the $\text{ROI}_k$ starting being unable to cover the structure-gauge region. In the first pattern, both two structure-gauge lines cross the upper side and the lower side of the $\text{ROI}_k$.

In an input image depicted in FIG. 7, a track 210 extends forward from the near side. That is, the track 210 extends from the lower side to the upper side of the input image. In FIG. 7, u coordinates increase from the left side to the right side, and v coordinates increase from the upper side to the lower side.

FIG. 7 depicts two consecutive ROIs, and depicts the preceding $\text{ROI}_k$ and the following $\text{ROI}_{k+1}$. In the first pattern, each of two structure-gauge lines 220A and 220B of the track 210 crosses the upper side and the lower side of the $\text{ROI}_k$. The center $C_k$ of the track 210 on the upper side of the $\text{ROI}_k$ has coordinates $(u_k, v_k)$.

On the upper side of the $\text{ROI}_k$, that is, at the v coordinate $v_k$, the track 210 has the width $w_k$, and the structure-gauge region has a width $l_k$. The $\text{ROI}_k$ has the width $r_k$. The widths of the track 210 and the structure-gauge region are lengths along the u axis. As described above, the relation of $l_k = (L/R)w_k$ holds true.

Two lower intersections of the structure-gauge lines 220A and 220B and the $\text{ROI}_k$ are both positioned on the lower side of the $\text{ROI}_k$. Accordingly, the v coordinate of a geographical point where the $\text{ROI}_k$ starts being unable to cover the structure-gauge region is the v coordinate of the lower side of the $\text{ROI}_k$. The v coordinate of the geographical point where the $\text{ROI}_k$ starts being unable to cover the structure-gauge region is a v coordinate $v_{k+1}$ of the upper side of the following $\text{ROI}_{k+1}$.

That is, the v coordinate $v_{k+1}$ of the upper side of the following $\text{ROI}_{k+1}$ coincides with the v coordinate $(v_k + r_k)$ of the lower side of the $\text{ROI}_k$. An intersection $C_{k+1}$ of the upper side of the $\text{ROI}_{k+1}$ and the centerline of the track 210 has coordinates $(u_{k+1}, v_{k+1})$.

On the upper side of the $\text{ROI}_{k+1}$, that is, at the v coordinate $v_{k+1}$, the track 210 has a width $w_{k+1}$, and the structure-gauge region has a width $l_{k+1}$. The $\text{ROI}_{k+1}$ has a width $r_{k+1}$. The relation of $l_{k+1} = (L/R)w_{k+1}$ holds true.

In the first pattern, there are abscissa values of the $\text{ROI}_k$ at which both the lower intersections of the two structure-gauge lines and the $\text{ROI}_k$ are positioned on the lower side of the $\text{ROI}_k$. The abscissa values can be set as abscissa values of the $\text{ROI}_k$ for performing the target-object detection process.

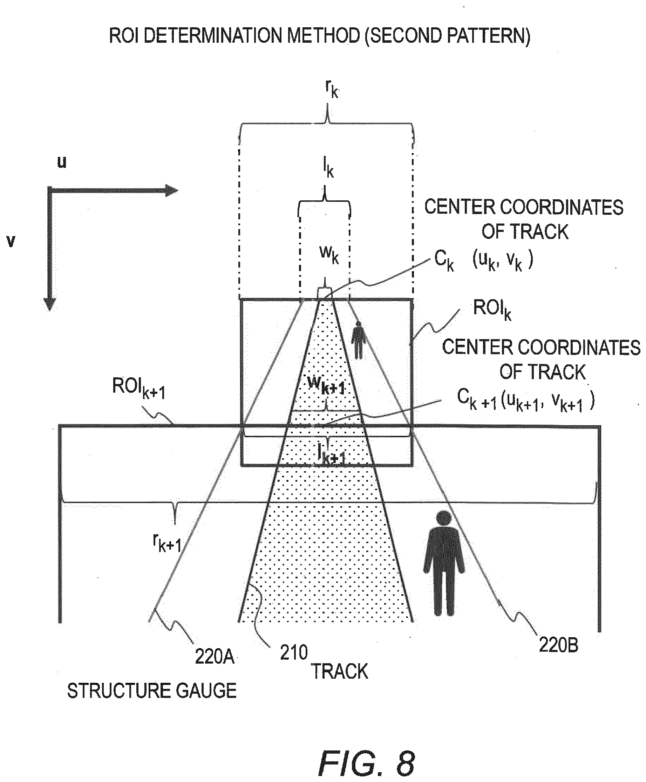

FIG. 8 schematically depicts a second pattern of the $\text{ROI}_k$ starting being unable to cover the structure-gauge region. In the second pattern, the left structure-gauge line crosses the upper side and the left side of the $\text{ROI}_k$. The right structure-gauge line crosses the upper side and the right side of the $\text{ROI}_k$.

In the example in FIG. 8, a left structure-gauge line 220A of the track 210 crosses the upper side and the left side of the $\text{ROI}_k$. A right structure-gauge line 220B of the track 210 crosses the upper side and the right side of the $\text{ROI}_k$.

The center $C_k$ of the track 210 on the upper side of the $\text{ROI}_k$ has the coordinates $(u_k, v_k)$. On the upper side of the $\text{ROI}_k$, that is, at the v coordinate $v_k$, the track 210 has the width $w_k$, and the structure-gauge region has the width $l_k$. The $\text{ROI}_k$ has the width $r_k$. The widths of the track 210 and the structure-gauge region are lengths along the u axis. The relation of $l_k = (L/R)w_k$ holds true.

The lower intersection of the structure-gauge line 220A and the $\text{ROI}_k$ is positioned on the left side of the $\text{ROI}_k$, and the lower intersection of the structure-gauge line 220B and the $\text{ROI}_k$ is positioned on the right side of the $\text{ROI}_k$. In the example in FIG. 8, the v coordinates of the lower intersections are the same. Accordingly, the v coordinate of the geographical point where the $\text{ROI}_k$ starts being unable to cover the structure-gauge region is the v coordinate of the lower intersections of the structure-gauge lines 220A and 220B and the $\text{ROI}_k$.

The v coordinate of the geographical point where the $\text{ROI}_k$ starts being unable to cover the structure-gauge region is the v coordinate $v_{k+1}$ of the upper side of the following $\text{ROI}_{k+1}$. That is, the v coordinate $v_{k+1}$ of the upper side of the following $\text{ROI}_{k+1}$ coincides with the v coordinates of the lower intersections. The intersection $C_{k+1}$ of the upper side of the $\text{ROI}_{k+1}$ and the centerline of the track 210 has the coordinates $(u_{k+1}, v_{k+1})$.

On the upper side of the $\text{ROI}_{k+1}$, that is, at the v coordinate $v_{k+1}$, the track 210 has the width $w_{k+1}$, and the structure-gauge region has the width $l_{k+1}$. The $\text{ROI}_{k+1}$ has the width $r_{k+1}$. The relation of $l_{k+1} = (L/R)w_{k+1}$ holds true. The

width $l_{k+1}$ of the structure-gauge region is the same as the width $r_{k+1}$ of the $ROI_{k+1}$. That is, a position where the width $l_{k+1}$ of the structure-gauge region and the width $r_{k+1}$ of the $ROI_{k+1}$ become the same is the position of the geographical point where the $ROI_k$ starts being unable to cover the structure-gauge region.

In the second pattern, there are abscissa values of the $ROI_k$ at which the lower intersections of the two structure-gauge lines and the $ROI_k$ are positioned on the left side and the right side of the $ROI_k$, respectively. Abscissa values of the $ROI_k$ for performing the target-object detection process can be determined such that the ordinate positions of the lower intersections are the same.

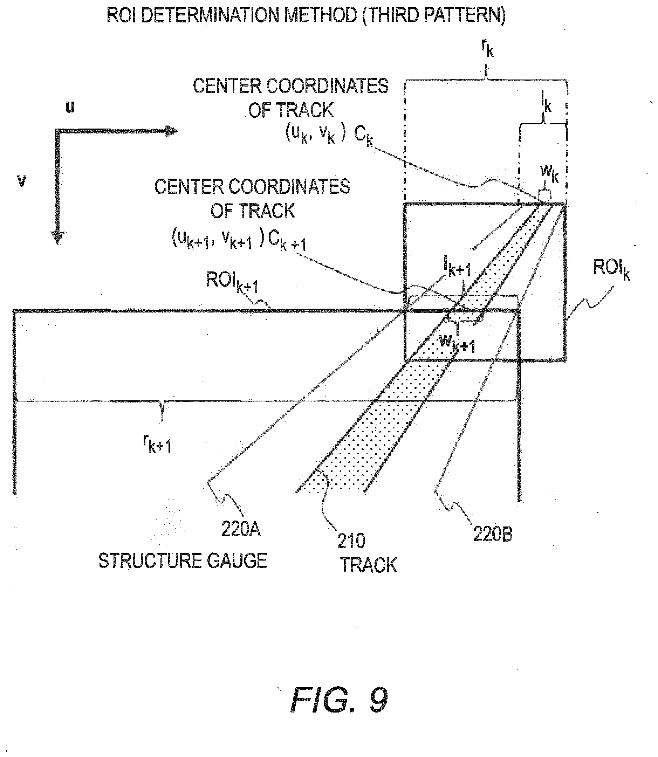

FIG. 9 schematically depicts a third pattern of the $ROI_k$ starting being unable to cover the structure-gauge region. In the third pattern, one of the left structure-gauge line and the right structure-gauge line crosses the upper side and the left side or the right side of the $ROI_k$. The other of the left structure-gauge line and the right structure-gauge line crosses the upper side and the lower side of the $ROI_k$.

In the example in FIG. 9, the track 210 curves significantly. The left structure-gauge line 220A of the track 210 crosses the upper side and the left side of the $ROI_k$. The right structure-gauge line 220B of the track 210 crosses the upper side and the lower side of the $ROI_k$.

The center $C_k$ of the track 210 on the upper side of the $ROI_k$ has the coordinates $(u_k, v_k)$. On the upper side of the $ROI_k$, that is, at the v coordinate $v_k$, the track 210 has the width $w_k$, and the structure-gauge region has the width $l_k$. The $ROI_k$ has the width $r_k$. The widths of the track 210 and the structure-gauge region are lengths along the u axis. The relation of $l_k = (L/R)w_k$ holds true.

The lower intersection of the structure-gauge line 220A and the $ROI_k$ is positioned on the left side of the $ROI_k$, and the lower intersection of the structure-gauge line 220B and the $ROI_k$ is positioned on the lower side of the $ROI_k$. The position of an intersection positioned higher, that is, positioned farther, among the lower intersections of the two structure-gauge lines is the position of the geographical point where the $ROI_k$ starts being unable to cover the structure-gauge region.

The v coordinate of the geographical point where the $ROI_k$ starts being unable to cover the structure-gauge region is the v coordinate $v_{k+1}$ of the upper side of the following $ROI_{k+1}$. That is, the v coordinate $v_{k+1}$ of the upper side of the following $ROI_{k+1}$ is the v coordinate of the intersection positioned higher, that is, positioned farther, among the lower intersections of the two structure-gauge lines. The same applies to the first and second patterns.

The intersection $C_{k+1}$ of the upper side of the $ROI_{k+1}$ and the centerline of the track 210 has the coordinates $(u_{k+1}, v_{k+1})$. On the upper side of the $ROI_{k+1}$, that is, at the v coordinate $v_{k+1}$, the track 210 has the width $w_{k+1}$, and the structure-gauge region has the width $l_{k+1}$. The $ROI_{k+1}$ has the width $r_{k+1}$. The relation of $l_{k+1} = (L/R)w_{k+1}$ holds true.

As described above, in the third pattern, the u coordinate of the centerline of the track 210 changes significantly. The position where the $ROI_k$ starts being unable to cover the structure-gauge region is a geographical point where the width $r_k$ of the $ROI_k$ becomes insufficient for the width of the structure-gauge region, that is, a geographical point where $(|u_{k+1}-u_k|+(l_k+l_{k+1})/2) = r_k$.

In the third pattern, there are abscissa values of the $ROI_k$ at which the lower intersection of one of the two structure-gauge lines and the $ROI_k$ is positioned on the right side or the left side of the $ROI_k$ and the lower intersection of the other of the two structure-gauge lines and the $ROI_k$ is positioned on the lower side of the $ROI_k$. Abscissa values of the $ROI_k$ for performing the target-object detection process can be determined such that, on a side opposite to the lower intersection of the one of the two structure-gauge lines and the $ROI_k$, the upper intersection of the one of the two structure-gauge lines and the $ROI_k$ coincides with the upper corner of the $ROI_k$.

As explained with reference to FIGS. 7 to 9, the structure-gauge region is defined by the two structure-gauge lines 220A and 220B. The ROI determining section 306 selects an intersection which is closer, that is, which has a greater v coordinate, among two intersections of each structure-gauge line and the $ROI_k$. Further, the ROI determining section 306 determines a farther intersection among the selected intersections of the two structure-gauge lines as a geographical point where the $ROI_k$ starts being unable to cover the structure-gauge region. That is, abscissa values of an ROI are determined such that the top position in the two lower intersections of the two structure-gauge lines and the ROI coincides with the lowest position of the image.

The fourth pattern is a case where the $ROI_k$ reaches the lower end of the screen, and an $ROI_l$ to the $ROI_k$ cover the entire structure-gauge region in the input image.

In the examples described above, the v coordinate $v_k$ where the width of the track is measured is used as the v coordinate value of the upper end of the $ROI_k$. The v coordinate $v_k$ is the reference ordinate value of the $ROI_k$. In another example, the v coordinate value of the upper end of the $ROI_k$ may be different from $v_k$, for example, may be positioned higher than $v_k$.

Referring back to FIG. 6, as described above, in step 607, the ROI determining section 306 identifies a geographical point where the $ROI_k$ starts being unable to cover the structure-gauge region, and assesses a relevant pattern. Next, in step 608, the ROI determining section 306 determines the center u coordinate of the $ROI_k$. In accordance with the pattern of the $ROI_k$ starting being unable to cover the structure-gauge region, the ROI determining section 306 can determine the center u coordinate of the $ROI_k$.

In the case of the first pattern, the ROI determining section 306 determines, as the u coordinate of the center of the $ROI_k$, the average of the u coordinate of the center of the track on the upper side (v coordinate $v_k$) of the $ROI_k$ and the u coordinate of the center of the track on the lower side (v coordinate $v_{k+1}$). As a result, the $ROI_k$ can surely include the entire region of the structure-gauge region from the v coordinate $v_k$ to the v coordinate $v_{k+1}$. The $ROI_k$ in FIG. 7 satisfies this condition.

In the case of the second pattern, the u coordinate of the center of the $ROI_k$ is determined such that the v coordinates of the intersections of the two structure-gauge lines and the left and right sides of the $ROI_k$ become the same. The u coordinate of the center of the $ROI_k$ and the u coordinate of the center of the track at the v coordinate $v_{k+1}$ match. As a result, the $ROI_k$ can include the entire region of the structure-gauge region from the v coordinate $v_k$ to the v coordinate $v_{k+1}$. The $ROI_k$ in FIG. 8 satisfies this condition.

In the case of the third pattern, the ROI determining section 306 may determine, as the u coordinate of the center of the $ROI_k$, $(u_k+l_k/2-r_k/2$ (when $u_k > u_{k+1}$)) or $(u_k-l_k/2+r_k/2$ (when $u_k < u_{k+1}$)). As a result, the $ROI_k$ can include the entire region of the structure-gauge region from the v coordinate $v_k$ to the v coordinate $v_{k+1}$. One of the structure-gauge lines crosses the upper corner of the $ROI_k$. The $ROI_k$ in FIG. 9 satisfies this condition.

In the case of the fourth pattern, the ROI determining section 306 determines, as the u coordinate of the center of the $ROI_k$, the u coordinate of the center of the track at the v coordinate $v_k$. As a result, the $ROI_k$ can include the entire region of the structure-gauge region in the image.

Note that the u coordinate value of the $ROI_k$ in each pattern may be determined by a method that is different from the methods described above. For example, in all the patterns, the u coordinate of the center of the track at the v coordinate $v_k$ may be determined as the u coordinate of the center of the $ROI_k$.

Next, in step 610, the ROI determining section 306 assesses whether a geographical point (v coordinate $v_{k+1}$) where the $ROI_k$ starts being unable to cover the structure-gauge region has been detected. In a case where there are no geographical points where the $ROI_k$. starts being unable to cover the structure-gauge region, that is, in the case of the fourth pattern (610: NO), the procedure proceeds to step 612. The ROI output section 307 outputs all ROIs. As a result, the ROI determination process in step 505 in FIG. 5 is completed.

In a case where a geographical point where the $ROI_k$ starts being unable to cover the structure-gauge region is detected, that is, in the case of the first, second, or third pattern (610: YES), in step 611, the ROI determining section 306 increments k. Thereafter, the procedure returns to step 606, and the next ROI is determined at a new position of the v coordinate $v_k$.

By the procedure described above, one or more ROIs cover the structure-gauge region in an input image over the range from the far side to the near side. In a case where a plurality of ROIs are defined for one input image, target objects can be detected in each ROI with the necessary detection precision set in the detection conditions.

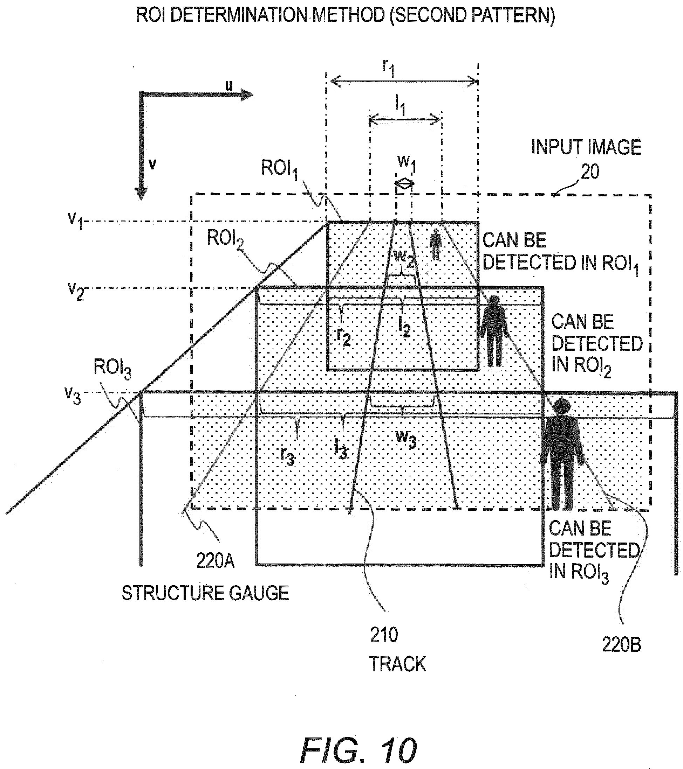

FIG. 10 depicts an example of a plurality of ROIs formed for one input image. In FIG. 10, three ROIs are . formed for the input image 20, and the three ROIs covers the entire structure-gauge region in the input image 20. The three ROIs are the $ROI_1$, the $ROI_2$, and the $ROI_3$. The $ROI_1$ and the $ROI_2$ are ROIs of the second pattern explained with reference to FIG. 8, and the $ROI_3$ is an ROI of the fourth pattern. Each ROI represents a detection limit of a region within which target objects can be detected.

As described above, the ROI determining section 306 determines the v coordinate $v_1$ of the $ROI_1$, which is the first ROI, and the ROI coefficient. From the ROI coefficient and the track width at the v coordinate $v_1$, the length of one side of the $ROI_1$ is determined. On the upper side of the $ROI_1$, that is, at the v coordinate $v_1$, the track 210 has a width $w_1$, and the structure-gauge region has a width $l_1$. The $ROI_1$ has a width $r_1$.

The ROI determining section 306 adjusts the u coordinate of the $ROI_1$ as necessary, and assesses the relation between the $ROI_1$ and the structure gauge. The relation between the $ROI_1$ and the track 210 corresponds to the second pattern. In FIG. 10, the left structure-gauge line 220A of the track 210 crosses the upper side and the left side of the $ROI_1$. The right structure-gauge line 220B of the track 210 crosses the upper side and the right side of the $ROI_1$.

The u coordinate of the center of the $ROI_1$ is determined such that the intersection of the structure-gauge line 220A and the $ROI_1$ and the lower intersection of the structure-gauge line 220B and the $ROI_1$ have the same v coordinate. The v coordinate of the geographical point where the $ROI_1$ starts being unable to cover the structure-gauge region is a v coordinate $v_2$ of the lower intersections of the structure-gauge lines 220A and 220B and the $ROI_k$.

The ROI determining section 306 performs a process of forming the next $ROI_2$ at the v coordinate $v_2$. The formation of the $ROI_2$ is similar to the formation of the $ROI_1$ described above. On the upper side of the $ROI_2$, that is, at the v coordinate $v_2$, the track 210 has a width $w_2$, and the structure-gauge region has a width $l_2$. The $ROI_2$ has a width $r_2$. The structure-gauge lines 220A and 220B cross the left and right sides of the $ROI_2$ at a v coordinate $v_3$.

Last, the $ROI_3$ is formed at the v coordinate $v_3$. At the v coordinate $v_3$, the track 210 has a width $w_3$, and the structure-gauge region has a width $l_3$. The $ROI_3$ has a width $r_3$. The relation between the $ROI_3$ and the structure-gauge region corresponds to the fourth pattern. The u coordinate of the center of the $ROI_3$ is determined in such a manner as to coincide with the u coordinate of the center of the track 210 at the v coordinate $v_3$.

In addition, each constituent element, function, processing section, or the like described above may be partially or entirely realized by hardware by, for example, designing it with an integrated circuit. In addition, each constituent element, function, and the like described above may be realized by software by a processor interpreting and executing a program to realize each function. Information such as a program, atable or a file to realize each function can be placed on a recording device such as a memory, a hard disk, or an SSD (Solid State Drive) or a recording medium such as an IC card or an SD card.

In addition, depicted control lines and information lines are ones that are considered to be necessary for explanation, and all control lines and information lines that are necessary for products are not necessarily depicted. It may be considered that, in practice, almost all constituent elements are interconnected.

**Claims**

1.  A system that detects a target object in an image, the system comprising:

> one or more storage devices (112); and
> one or more calculating devices (111), wherein
> the one or more storage devices (112) store a coefficient, and
> the one or more calculating devices (111)

>> acquire an image (20) captured from a moving body moving on a track (25),
>> detect the track (25) in the image (20), determine a width of the track (25) at a reference ordinate value selected on the image (20),

>> **characterized by**

>> determine a size of a region of interest in the image (20) on a basis of the width of the track (25) and the coefficient,
>> determine a positional coordinate of the region of interest in the image (20) on a basis of the reference ordinate value and the detected track (25), and
>> execute a target-object detection process on the region of interest at the determined positional coordinate,

> wherein the coefficient is determined as iP/pR, where i is a length of one side of an image to be input to an object detection model in pixels, P is an average height of the detection target in the real world in meters, p is a height required for object detection in pixels, and R is the track width in the real world,
> wherein a maximum size of the region of interest is a multiplication of the width of the track (25) and the coefficient.

2.  The system according to claim 1, wherein

> the one or more calculating devices (111)

>> determine an ordinate value of the region of interest on a basis of the reference ordinate value, which is an ordinate value of an upper side of the region of interest,
>> determine a detection region where a target object should be detected, on a basis of the detected track (25), and
>> determine abscissa values of the region of interest on a basis of a positional relation between the detection region and the region of interest,

> wherein ordinate values are coordinates in a longitudinal direction and abscissa values are coordinates in a lateral direction.

3.  The system according to claim 2, wherein

> the detection region is defined by two boundary lines extending in an up-down direction in the image (20), wherein the two boundary lines represent a structure gauge on both sides and
> the one or more calculating devices (111) determine the abscissa values of the region of interest such that a top position of two lower intersections of the two boundary lines and the region of interest is at a lowest position of the image (20).

4. The system according to claim 2, wherein

the detection region is defined by two boundary lines extending in an up-down direction in the image (20), wherein the two boundary lines = represent a structure gauge on both sides,
the region of interest is a rectangle including two sides parallel to an axis of an abscissa and two sides parallel to an axis of an ordinate, and,
in a case where there are abscissa values of the region of interest at which both lower intersections of the two boundary lines and the region of interest are positioned on a lower side of the region of interest, the one or more calculating devices (111) determine the abscissa values as abscissa values of the region of interest for performing the target-object detection process.

5. The system according to claim 2, wherein

the detection region is defined by two boundary lines extending in an up-down direction in the image (20), wherein the two boundary lines represent a structure gauge on both sides,
the region of interest includes two sides parallel to an axis of an abscissa and two sides parallel to an axis of an ordinate, and
the one or more calculating devices (111), in a case where there are abscissa values of the region of interest at which lower intersections of the two boundary lines and the region of interest are positioned on a left side and a right side of the region of interest, respectively, determine abscissa values of the region of interest for performing the target-object detection process such that ordinate positions of the lower intersections are the same.

6. The system according to claim 2, wherein

the detection region is defined by two boundary lines extending in an up-down direction in the image (20), wherein the two boundary lines represent a structure gauge on both sides,
the region of interest includes two sides parallel to an axis of an abscissa and two sides parallel to an axis of an ordinate, and
the one or more calculating devices (111), in a case where there are abscissa values of the region of interest at which a lower intersection of one of the two boundary lines and the region of interest is positioned on a right side or a left side of the region of interest and a lower intersection of the other of the two boundary lines and the region of interest is positioned on a lower side of the region of interest, determine abscissa values of the region of interest for performing the target-object detection process such that, on a side opposite to the lower intersection of the one of the two boundary lines and the region of interest, an upper intersection of the one of the two boundary lines and the region of interest coincides with an upper corner of the region of interest.

7. The system according to claim 1, wherein a width of the region of interest is the width of the track (25) multiplied by a constant.

8. The system according to claim 1, wherein

the one or more calculating devices (111) determine the coefficient on a basis of a user-designated detection condition, and stores the coefficient on the one or more storage devices (112), and
the detection condition includes at least one of a target-object type, detection precision, a track width, and a surrounding environment.

9. The system according to claim 2, wherein

the detection region is defined by two boundary lines extending in an up-down direction in the image (20), wherein the two boundary lines represent a structure gauge on both sides, and
the one or more calculating devices (111) select the reference ordinate value for a next region of interest on a basis of a top position of two lower intersections of the two boundary lines and the region of interest on which the target-object detection process has been executed.

10. The system according to claim 9, wherein

the region of interest includes two sides parallel to an axis of an abscissa and two sides parallel to an axis of an ordinate,

an ordinate value of the top position of the two lower intersections of the two boundary lines and the region of interest on which the target-object detection process has been executed is the reference ordinate value for the next region of interest, and

the reference ordinate value selected on the image (20) is an ordinate value of an upper side of the next region of interest.

11. A computer-implemented method of detecting a target object in an image (20), the method comprising:

acquiring an image (20) captured from a moving body moving on a track (25);

detecting the track (25) in the image (20);

determining a width of the track (25) at a reference ordinate value selected on the image (20);

**characterized by**

determining a size of a region of interest in the image (20) on a basis of the width of the track (25) and a designated coefficient;

determining a positional coordinate of the region of interest in the image (20) on a basis of the reference ordinate value and the detected track (25); and

executing a target-object detection process on the region of interest at the determined positional coordinate, wherein the coefficient is determined as iP/pR, where i is a length of one side of an image to be input to an object detection model in pixels, P is an average height of the detection target in the real world in meters, p is a height required for object detection in pixels, and R is the track width in the real world,

wherein a maximum size of the region of interest is a multiplication of the width of the track (25) and the coefficient.

## Patentansprüche

1. System, das ein Zielobjekt in einem Bild detektiert, wobei das System Folgendes umfasst:

eine oder mehrere Speichervorrichtungen (112); und

eine oder mehrere Rechenvorrichtungen (111), wobei

die eine oder die mehreren Speichervorrichtungen (112) einen Koeffizienten speichern, und

die eine oder die mehreren Rechenvorrichtungen (111)

ein Bild (20) erfassen, das von einem sich bewegenden Körper, der sich auf einem Gleis (25) bewegt, aufgenommen wird,

das Gleis (25) im Bild (20) detektieren und

eine Breite des Gleises (25) an einem Referenzordinatenwert, der auf dem Bild (20) ausgewählt wird, bestimmen,

**gekennzeichnet durch**

Bestimmen einer Größe eines Bereichs von Interesse im Bild (20) auf der Grundlage der Breite des Gleises (25) und des Koeffizienten,

Bestimmen einer Positionskoordinate des Bereichs von Interesse im Bild (20) auf der Grundlage des Referenzordinatenwertes und des detektierten Gleises (25) und

Ausführen eines Zielobjekt-Detektionsprozesses auf dem Bereich von Interesse an der bestimmten Positionskoordinate,

wobei der Koeffizient als iP/pR bestimmt wird, wobei i eine Länge einer Seite eines Bildes, das in ein Objektdetektionsmodell eingegeben werden soll, in Pixeln ist, P eine durchschnittliche Höhe des Detektionsziels in der realen Welt in Metern ist, p eine Höhe, die zur Objektdetektion erforderlich ist, in Pixeln ist, und R die Gleisbreite in der realen Welt ist,

wobei eine maximale Größe des Bereichs von Interesse eine Multiplikation der Breite des Gleises (25) und des Koeffizienten ist.

2. System nach Anspruch 1, wobei

die eine oder die mehreren Rechenvorrichtungen (111)

einen Ordinatenwert des Bereichs von Interesse auf der Grundlage des Referenzordinatenwertes, der ein Ordinatenwert einer oberen Seite des Bereichs von Interesse ist, bestimmen,

einen Detektionsbereich, in dem ein Zielobjekt detektiert werden sollte, auf der Grundlage des detektierten Gleises (25) bestimmen und

Abszissenwerte des Bereichs von Interesse auf der Grundlage einer Positionsbeziehung zwischen dem Detektionsbereich und den Bereich von Interesse bestimmen,

wobei Ordinatenwerte Koordinaten in einer Längsrichtung sind und Abszissenwerte Koordinatenwerte in einer Seitenrichtung sind.

3. System nach Anspruch 2, wobei

der Detektionsbereich durch zwei Begrenzungslinien definiert wird, die sich in einer Oben-Unten-Richtung im Bild (20) erstrecken, wobei die zwei Begrenzungslinien eine Strukturspurweite auf beiden Seiten darstellen, und die eine oder die mehreren Rechenvorrichtungen (111) die Abszissenwerte des Bereichs von Interesse derart bestimmen, dass sich eine oberste Position von zwei unteren Kreuzungspunkten der zwei Begrenzungslinien und des Bereichs von Interesse an einer untersten Position des Bildes (20) befindet.

4. System nach Anspruch 2, wobei

der Detektionsbereich durch zwei Begrenzungslinien definiert ist, die sich in einer Oben-Unten-Richtung im Bild (20) erstrecken, wobei die zwei Begrenzungslinien eine Strukturspurweite auf beiden Seiten darstellen, der Bereich von Interesse ein Rechteck ist, das zwei Seiten parallel zu einer Abszissenachse und zwei Seiten parallel zu einer Ordinatenachse enthalten, und dann, wenn es Abszissenwerte des Bereichs von Interesse gibt, bei denen beide unteren Kreuzungspunkte der zwei Begrenzungslinien und des Bereichs von Interesse auf einer unteren Seite des Bereichs von Interesse angeordnet sind, die eine oder die mehreren Rechenvorrichtungen (111) die Abszissenwerte als Abszissenwerte des Bereichs von Interesse zum Durchführen des Zielobjekt-Detektionsprozesses bestimmen.

5. System nach Anspruch 2, wobei

der Detektionsbereich durch zwei Begrenzungslinien definiert ist, die sich in einer Oben-Unten-Richtung im Bild (20) erstrecken, wobei die zwei Begrenzungslinien eine Strukturspurweite auf beiden Seiten darstellen, der Bereich von Interesse zwei Seiten parallel zu einer Abszissenachse und zwei Seiten parallel zu einer Ordinatenachse enthält, und die eine oder die mehreren Rechenvorrichtungen (111) dann, wenn es Abszissenwerte des Bereichs von Interesse gibt, bei denen die unteren Kreuzungspunkte der zwei Begrenzungslinien und des Bereichs von Interesse auf einer linken Seite bzw. einer rechten Seite des Bereichs von Interesse angeordnet sind, Abszissenwerte des Bereichs von Interesse zum Durchführen des Zielobjekt-Detektionsprozesses derart bestimmen, dass die Ordinatenpositionen der unteren Kreuzungspunkte dieselben sind.

6. System nach Anspruch 2, wobei

der Detektionsbereich durch zwei Begrenzungslinien definiert ist, die sich in einer Oben-Unten-Richtung im Bild (20) erstrecken, wobei die zwei Begrenzungslinien eine Strukturspurweite auf beiden Seiten darstellen, der Bereich von Interesse zwei Seiten parallel zu einer Abszissenachse und zwei Seiten parallel zu einer Ordinatenachse enthält, und die eine oder die mehreren Rechenvorrichtungen (111) dann, wenn es Abszissenwerte des Bereichs von Interesse gibt, bei denen ein unterer Kreuzungspunkt einer der zwei Begrenzungslinien und des Bereichs von Interesse auf einer rechten Seite oder einer linken Seite des Bereichs von Interesse angeordnet ist und ein unterer Kreuzungspunkt der anderen der zwei Begrenzungslinien und des Bereichs von Interesse auf einer unteren Seite des Bereichs von Interesse angeordnet ist, Abszissenwerte des Bereichs von Interesse zum Durchführen des Zielobjekt-Detektionsprozesses derart bestimmen, dass auf einer Seite, die dem unteren Kreuzungspunkt der einen der zwei Begrenzungslinien und des Bereichs von Interesse gegenüberliegt, ein oberer Kreuzungspunkt der einen der zwei Begrenzungslinien und des Bereichs von Interesse mit einer oberen Ecke des Bereichs von Interesse übereinstimmt.

7. System nach Anspruch 1, wobei eine Breite des Bereichs von Interesse die Breite des Gleises (25) multipliziert mit einer Konstante ist.

8. System nach Anspruch 1, wobei

die eine oder die mehreren Rechenvorrichtungen (111) den Koeffizienten auf der Grundlage einer durch einen Benutzer bezeichneten Detektionsbedingung bestimmen und den Koeffizienten auf der einen oder den mehreren Speichervorrichtungen (112) speichern, und
die Detektionsbedingung eine Art des Zielobjekts und/oder eine Detektionsgenauigkeit und/oder eine Gleisbreite und/oder eine umliegenden Umgebung enthält.

9. System nach Anspruch 2, wobei

der Detektionsbereich durch zwei Begrenzungslinien definiert wird, die sich in einer Oben-Unten-Richtung im Bild (20) erstrecken,
wobei die zwei Begrenzungslinien eine Strukturspurweite auf beiden Seiten darstellen, und
die eine oder die mehreren Rechenvorrichtungen (111) den Referenzordinatenwert für einen nächsten Bereich von Interesse auf der Grundlage einer obersten Position der zwei unteren Kreuzungspunkte der zwei Begrenzungslinien und des Bereichs von Interesse, auf dem der Zielobjekt-Detektionsprozess ausgeführt worden ist, auswählen.

10. System nach Anspruch 9, wobei

der Bereich von Interesse zwei Seiten parallel zu einer Abszissenachse und zwei Seiten parallel zu einer Ordinatenachse enthält,
ein Ordinatenwert der obersten Position der zwei unteren Kreuzungspunkte der zwei Begrenzungslinien und des Bereichs von Interesse, auf dem der Zielobjekt-Detektionsprozess ausgeführt worden ist, der Referenzordinatenwert für den nächsten Bereich von Interesse ist, und
der Referenzordinatenwert, der auf dem Bild (20) ausgewählt wird, ein Ordinatenwert einer oberen Seite des nächsten Bereichs von Interesse ist.

11. Computer-implementiertes Verfahren zum Detektieren eines Zielobjekts in einem Bild (20), wobei das Verfahren Folgendes umfasst:

Erfassen eines Bildes (20), das von einem sich bewegenden Körper, der sich auf einem Gleis (25) bewegt, aufgenommen wird;
Detektieren des Gleises (25) im Bild (20);
Bestimmen einer Breite des Gleises (25) an einem Referenzordinatenwert, der auf dem Bild (20) ausgewählt wird;
**gekennzeichnet durch**
Bestimmen einer Größe eines Bereichs von Interesse im Bild (20) auf der Grundlage der Breite des Gleises (25) und eines bezeichneten Koeffizienten;
Bestimmen einer Positionskoordinate des Bereichs von Interesse im Bild (20) auf der Grundlage des Referenzordinatenwertes und des detektierten Gleises (25); und
Ausführen eines Zielobjekt-Detektionsprozesses auf dem Bereich von Interesse an der bestimmten Positionskoordinate,

wobei der Koeffizient als $iP/pR$ bestimmt wird, wobei i eine Länge einer Seite eines Bildes, das in ein Objektdetektionsmodell eingegeben werden soll, in Pixeln ist, P eine durchschnittliche Höhe des Detektionsziels in der realen Welt in Metern ist, p eine Höhe, die zur Objektdetektion erforderlich ist, in Pixeln ist, und R die Gleisbreite in der realen Welt ist,
wobei eine maximale Größe des Bereichs von Interesse eine Multiplikation der Breite des Gleises (25) und des Koeffizienten ist.

**Revendications**

1. Système qui détecte un objet cible dans une image, le système comprenant :

un ou plusieurs dispositifs de stockage (112) ; et
un ou plusieurs dispositifs de calcul (111), dans lequel
lesdits un ou plusieurs dispositifs de stockage (112) stockent un coefficient, et
lesdits un ou plusieurs dispositifs de calcul (111)

acquièrent une image (20) capturée à partir d'un corps mobile en déplacement sur une piste (25),
détectent la piste (25) dans l'image (20),
déterminent une largeur de la piste (25) à une valeur d'ordonnée de référence sélectionnée sur l'image (20),

**caractérisé par** les opérations consistant à

déterminer une taille d'une région d'intérêt dans l'image (20) sur une base de la largeur de la piste (25) et du coefficient,
déterminer une coordonnée de position de la région d'intérêt dans l'image (20) sur une base de la valeur d'ordonnée de référence et de la piste détectée (25), et
exécuter un processus de détection d'objet cible sur la région d'intérêt à la coordonnée de position déterminée,

dans lequel le coefficient est déterminé comme iP/pR, où i est une longueur d'un côté d'une image à entrer dans un modèle de détection d'objet en pixels, P est une hauteur moyenne de la cible de détection dans le monde réel en mètres, p est une hauteur requise pour une détection d'objet en pixels, et R est la largeur de piste dans le monde réel,
dans lequel une taille maximum de la région d'intérêt est une multiplication de la largeur de la piste (25) et du coefficient.

2. Système selon la revendication 1, dans lequel
lesdits un ou plusieurs dispositifs de calcul (111)

déterminent une valeur d'ordonnée de la région d'intérêt sur une base de la valeur d'ordonnée de référence, qui est une valeur d'ordonnée d'un côté supérieur de la région d'intérêt,
déterminent une région de détection dans laquelle un objet cible devrait être détecté, sur une base de la piste détectée (25), et
déterminent une valeur d'abscisse de la région d'intérêt sur une base d'une relation de position entre la région de détection et la région d'intérêt, dans lequel des valeurs d'ordonnées sont des coordonnées dans une direction longitudinale et des valeurs d'abscisses sont des coordonnées dans une direction latérale.

3. Système selon la revendication 2, dans lequel

la région de détection est définie par deux lignes de délimitation s'étendant dans une direction haut/bas dans l'image (20),
dans lequel les deux lignes de délimitation représentent une jauge de structure sur les deux côtés, et
lesdits un ou plusieurs dispositifs de calcul (111) déterminent les valeurs d'abscisse de la région d'intérêt de telle sorte qu'une position de sommet de deux intersections inférieures des deux lignes de délimitation et de la région d'intérêt est à une position la plus basse de l'image (20).

4. Système selon la revendication 2, dans lequel

la région de détection est définie par deux lignes de délimitation s'étendant dans une direction haut/bas dans l'image (20),
dans lequel les deux lignes de délimitation représentent une jauge de structure sur les deux côtés,
la région d'intérêt est un rectangle incluant deux côtés parallèles à un axe d'une abscisse et deux côtés parallèles à un axe d'une ordonnée, et,
dans un cas où il y a des valeurs d'abscisses de la région d'intérêt auxquelles les deux intersections inférieures des deux lignes de délimitation et de la région d'intérêt sont positionnées sur un côté inférieur de la région d'intérêt, lesdits un ou plusieurs dispositifs de calcul (111) déterminent les valeurs d'abscisses à titre de valeurs d'abscisses de la région d'intérêt pour effectuer le processus de détection d'objet cible.

5. Système selon la revendication 2, dans lequel

la région de détection est définie par deux lignes de délimitation s'étendant dans une direction haut/bas dans l'image (20),

dans lequel les deux lignes de délimitation représentent une jauge de structure sur les deux côtés,

la région d'intérêt inclut deux côtés parallèles à un axe d'une abscisse et deux côtés parallèles à un axe d'une ordonnée, et

lesdits un ou plusieurs dispositifs de calcul (111), dans un cas où il y a des valeurs d'abscisses de la région d'intérêt auxquelles les deux intersections inférieures des deux lignes de délimitation et de la région d'intérêt sont positionnées sur un côté de gauche et un côté de droite de la région d'intérêt, respectivement, déterminent des valeurs d'abscisses de la région d'intérêt pour effectuer le processus de détection d'objet cible de telle sorte que des positions d'ordonnées des intersections inférieures sont les mêmes.

6. Système selon la revendication 2, dans lequel

la région de détection est définie par deux lignes de délimitation s'étendant dans une direction haut/bas dans l'image (20),

dans lequel les deux lignes de délimitation représentent une jauge de structure sur les deux côtés,

la région d'intérêt inclut deux côtés parallèles à un axe d'une abscisse et deux côtés parallèles à un axe d'une ordonnée, et

lesdits un ou plusieurs dispositifs de calcul (111), dans un cas où il y a des valeurs d'abscisses de la région d'intérêt auxquelles une intersection inférieures de l'une des deux lignes de délimitation et de la région d'intérêt sont positionnées sur un côté de droite ou un côté de gauche de la région d'intérêt et une intersection inférieure de l'autre des deux lignes de délimitation et de la région d'intérêt est positionnée sur un côté inférieur de la région d'intérêt, déterminent des valeurs d'abscisses de la région d'intérêt pour effectuer le processus de détection d'objet cible de telle sorte que, sur un côté opposé à l'intersection inférieure de l'une des deux lignes de délimitation et de la région d'intérêt, une intersection supérieure de l'une des deux lignes de délimitation et de la région d'intérêt coïncide avec un coin supérieur de la région d'intérêt.

7. Système selon la revendication 1, dans lequel une largeur de la région d'intérêt est la largeur de la piste (25) multipliée par une constante.

8. Système selon la revendication 1, dans lequel

lesdits un ou plusieurs dispositifs de calcul (111) déterminent le coefficient sur une base d'une condition de détection conçue utilisateur, et stocke le coefficient sur lesdits un ou plusieurs dispositifs de stockage (111), et

la condition de détection inclut au moins un élément parmi un type d'objet cible, une précision de détection, une largeur de piste, et un environnement alentours.

9. Système selon la revendication 2, dans lequel

la région de détection est définie par deux lignes de délimitation s'étendant dans une direction haut/bas dans l'image (20),

dans lequel les deux lignes de délimitation représentent une jauge de structure sur les deux côtés, et

lesdits un ou plusieurs dispositifs de calcul (111) sélectionnent la valeur d'ordonnée de référence pour une région d'intérêt suivante sur une base d'une position de sommet de deux intersections inférieures des deux lignes de délimitation et de la région d'intérêt sur laquelle le processus de détection d'objet cible a été exécuté.

10. Système selon la revendication 9, dans lequel

la région d'intérêt inclut deux côtés parallèles à un axe d'une abscisse et deux côtés parallèles à un axe d'une ordonnée,

une valeur d'ordonnée de la position de sommet des deux intersections inférieures des deux lignes de délimitation et de la région d'intérêt sur laquelle le processus de détection d'objet cible a été exécuté est la valeur d'ordonnée de référence pour la région d'intérêt suivante, et

la valeur d'ordonnée de référence sélectionnée sur l'image (20) est une valeur d'ordonnée d'un côté supérieur de la région d'intérêt suivante.

11. Procédé, mis en œuvre par ordinateur, de détection d'un objet cible dans une image (20), le procédé comprenant les étapes consistant à :

acquérir une image (20) capturée à partir d'un corps mobile en déplacement sur une piste (25) ;

détecter la piste (25) dans l'image (20) ;

déterminer une largeur de la piste (25) à une valeur d'ordonnée de référence sélectionnée sur l'image (20) ;

**caractérisé par** les étapes consistant à

déterminer une taille d'une région d'intérêt dans l'image (20) sur une base de la largeur de la piste (25) et d'un coefficient désigné ;

déterminer une coordonnée de position de la région d'intérêt dans l'image (20) sur une base de la valeur d'ordonnée de référence et de la piste détectée (25) ; et

exécuter un processus de détection d'objet cible sur la région d'intérêt à la coordonnée de position déterminée, dans lequel le coefficient est déterminé comme iP/pR, où i est une longueur d'un côté d'une image à entrer dans un modèle de détection d'objet en pixels, P est une hauteur moyenne de la cible de détection dans le monde réel en mètres, p est une hauteur requise pour une détection d'objet en pixels, et R est la largeur de piste dans le monde réel,

dans lequel une taille maximum de la région d'intérêt est une multiplication de la largeur de la piste (25) et du coefficient.

10

## INTRA-STRUCTURE-GAUGE OBSTACLE DETECTION SYSTEM

113

### AUXILIARY STORAGE DEVICE

114

| INPUT DEVICE |

| IMAGE ACQUIRING SECTION | 101 |

115

| OUTPUT DEVICE |

| DETECTION CONDITION ASSESSING SECTION | 102 |

| TRACK DETECTING SECTION | 103 |

111

| CALCULATING DEVICE |

| STRUCTURE-GAUGE REGION ASSESSING SECTION | 104 |

112

| MAIN STORAGE DEVICE |

| ROI PROCESSING SECTION | 106 |

116

| COMMUNICATION IF |

| OBSTACLE DETECTING SECTION | 107 |

| RESULT OUTPUT SECTION | 108 |

117

| MANAGEMENT INFORMATION DB | 120 |

## FIG. 1

INPUT IMAGE

FIG. 2

ROI PROCESSING
SECTION    106

IMAGE INPUT
SECTION — 301

TRACK DETECTION
RESULT INPUT
SECTION — 302

DETECTION
CONDITION INPUT
SECTION — 303

ROI COEFFICIENT
DETERMINING
SECTION — 304

STRUCTURE-GAUGE
REGION INPUT
SECTION — 305

ROI DETERMINING
SECTION — 306

ROI OUTPUT SECTION — 307

FIG. 3

|  411 | 412 | 410 |
| --- | --- |
| DETECTION-TARGET OBJECT | COEFFICIENT |
| HUMAN (ADULT) | 30 |
| HUMAN (CHILD) | 15 |
| HUMAN (LYING DOWN) | 5 |
| AUTOMOBILE | 50 |
| BICYCLE | 35 |
| COW/HORSE | 40 |
| ... | ... |

DETECTION-TARGET-OBJECT COEFFICIENT TABLE

## FIG. 4A

420

| 421 | 422 | 423 |
| --- | --- | --- |
| DETECTION MODEL | NECESSARY DETECTION PRECISION | COEFFICIENT |
| MODEL A | 95% | 608 |
| MODEL A | 90% | 1216 |
| MODEL A | 80% | 2432 |
| MODEL B | 95% | 416 |
| MODEL B | 90% | 832 |
| MODEL B | 80% | 1664 |
| MODEL C | 95% | 399 |
| ... | ... | ... |

OBSTACLE DETECTION MODEL/DETECTION PRECISION COEFFICIENT TABLE

## FIG. 4B

431     432     430

| TRACK WIDTH | COEFFICIENT |
|---|---|
| 1067mm | 0.93 |
| 1372mm | 0.73 |
| 1435mm | 0.70 |

TRACK WIDTH COEFFICIENT TABLE

## FIG. 4C

440

441     442     443

| WEATHER | TIME INTERVAL | COEFFICIENT |
|---|---|---|
| FINE WEATHER | DAYTIME | 1.0 |
| FINE WEATHER | EVENING | 0.95 |
| FINE WEATHER | NIGHTTIME | 0.4 |
| RAIN | DAYTIME | 0.6 |
| RAIN | EVENING | 0.57 |
| RAIN | NIGHTTIME | 0.24 |
| SNOW | DAYTIME | 0.4 |
| ... | ... | ... |

WEATHER/TIME INTERVAL COEFFICIENT TABLE

## FIG. 4D

FIG. 5

```
        ┌─────────────────────────┐
        │   ROI DETERMINATION     │
        │        START            │
        └───────────┬─────────────┘
                    │
        ┌───────────▼─────────────┐
        │   RECEIVE INPUT IMAGE   │ ∿ 601
        └───────────┬─────────────┘
                    │
        ┌───────────▼─────────────┐
        │   RECEIVE TRACK DETECTION│
        │   RESULT AND STRUCTURE-  │ ∿ 602
        │     GAUGE REGION         │
        └───────────┬─────────────┘
                    │
        ┌───────────▼─────────────┐
        │   RECEIVE DETECTION     │ ∿ 603
        │     CONDITIONS          │
        └───────────┬─────────────┘
                    │
        ┌───────────▼─────────────┐
        │ DETERMINE ROI COEFFICIENT│ ∿ 604
        └───────────┬─────────────┘
                    │
        ┌───────────▼─────────────┐
        │ DETERMINE DETECTION STARTING│
        │  GEOGRAPHICAL POINT v₁  │ ∿ 605
        │       SET k = 1         │
        └───────────┬─────────────┘
                    │
        ┌───────────▼─────────────┐
        │ DETERMINE WIDTH rₖ OF ROI BY│
        │ MULTIPLYING TRACK WIDTH wₖ│ ∿ 606
        │  AT vₖ BY ROI COEFFICIENT │
        └───────────┬─────────────┘
                    │
        ┌───────────▼─────────────┐
        │ SEARCH FOR GEOGRAPHICAL │
        │ POINT vₖ₊₁ WHERE ROIₖ STARTS│ ∿ 607
        │ BEING UNABLE TO COVER   │
        │   STRUCTURE GAUGE       │
        └───────────┬─────────────┘
                    │
        ┌───────────▼─────────────┐
        │  DETERMINE CENTER u     │ ∿ 608
        │  COORDINATE OF ROIₖ     │
        └───────────┬─────────────┘
                    │
              ┌─────▼─────┐  610
              ╱             ╲        NO
             ╱  vₖ₊₁ FOUND? ╲──────────────┐
             ╲              ╱               │
              ╲            ╱                │
               └────┬─────┘                │
                    │ YES    611           │ 612
        ┌───────────▼─────────────┐  ┌─────▼──────────────┐
        │     INCREMENT k         │  │ OUTPUT ROI₁ TO ROIₖ│
        └─────────────────────────┘  └─────┬──────────────┘
                                           │
                                     ┌─────▼──────────────┐
                                     │ ROI DETERMINATION PROCESS│
                                     │        END          │
                                     └────────────────────┘
```

*FIG. 6*

ROI DETERMINATION METHOD (FIRST PATTERN)

FIG. 7

ROI DETERMINATION METHOD (SECOND PATTERN)

$r_k$

$l_k$

u

v

$w_k$

CENTER COORDINATES
OF TRACK
$C_k \ (u_k, v_k)$

$ROI_k$

CENTER COORDINATES
OF TRACK
$C_{k+1} (u_{k+1}, v_{k+1})$

$ROI_{k+1}$

$w_{k+1}$

$l_{k+1}$

$r_{k+1}$

220A

210
TRACK

220B

STRUCTURE GAUGE

*FIG. 8*

ROI DETERMINATION METHOD (THIRD PATTERN)

*FIG. 9*

ROI DETERMINATION METHOD (SECOND PATTERN)

*FIG. 10*

**EP 4 397 564 B1**

**REFERENCES CITED IN THE DESCRIPTION**

**Patent documents cited in the description**

- JP 2019181996 A
- JP 2020203634 A